# EUROPÄISCHE PATENTSCHRIFT

(11) **EP 2 252 444 B1**
(45) Veröffentlichungstag und Bekanntmachung des Hinweises auf die Patenterteilung: **19.03.2014**
(21) Anmeldenummer: 09705538.8
(22) Anmeldetag: 30.01.2009
(51) Int. Cl.: B29C 43/02, B29C 43/52, B29C 33/38, F16D 69/00

(54) **VORRICHTUNG ZUR HERSTELLUNG VON REIBBELÄGEN**
DEVICE FOR THE MANUFACTURE OF FRICTION SURFACES
DISPOSITIF POUR FABRIQUER DES GARNITURES DE FRICTION

(30) Priorität: 31.01.2008 DE 102008006817
(43) Veröffentlichungstag der Anmeldung: 24.11.2010
(73) Patentinhaber: TMD Friction Services GmbH, 51381 Leverkusen (DE)
(72) Erfinder: BAUER, Gerhard, 51371 Leverkusen (DE)
(74) Vertreter: Müller, Eckhard
(86) Internationale Anmeldenummer: PCT/EP2009/000599
(87) Internationale Veröffentlichungsnummer: WO 2009/095248

(56) Entgegenhaltungen:
- DE-U1-202004 018 590
- US-A1- 2006 091 583
- DATABASE WPI Week 197926 Thomson Scientific, London, GB; AN 1979-47664B XP002529867 & JP 54 060360 A (TOYOTA JIDOSHA KK) 15. Mai 1979 (1979-05-15)
- DATABASE WPI Week 200373 Thomson Scientific, London, GB; AN 2003-771304 XP002529868 & JP 2003 127161 A (AKEBONO BRAKE KOGYO CHUO GIJUTSU KK) 8. Mai 2003 (2003-05-08)

## Beschreibung

Die vorliegende Erfindung betrifft eine Vorrichtung zur Herstellung, insbesondere zum Verpressen, von Reibbelägen für Bremsen und/oder Kupplungen von Fahrzeugen mit einer Pressform und einem Pressstempel gemäß dem Oberbegriff des Anspruchs 1.

### Stand der Technik

Reibbeläge, insbesondere für Kupplungen oder Scheibenbremsen von Kraftfahrzeugen, werden durch Verpressen einer granularen Reibbelagmasse erzeugt. Dabei wird das als Schütt- oder Pressgut vorliegende Reibmaterial in eine Pressform gefüllt und anschließend mittels eines Pressstempels unter Wärmeeinwirkung verdichtet. Während dieses Pressvorgangs, dem optional ein anschließender Aushärtvorgang nachgelagert sein kann, führen die im Reibmaterial enthaltenen Bindemittel eine Vernetzungsreaktion durch, die u. a. dem fertigen Endprodukt die nötige Stabilität und Festigkeit verleihen.

Beim Pressen, beispielsweise von Scheibenbremsbelägen, werden typischerweise Presszeiten im Minutenbereich, etwa 3 bis 6 Minuten, benötigt. Diese Zeitspanne ergibt sich aus der Wärmeleitfähigkeit des zu verpressenden Pressguts und der Art und Weise des Wärmeeintrags in das zu verpressende Reibmaterial. Während des Pressvorgangs sollen sämtliche Bereiche des Reibmaterials auf eine Temperatur oberhalb der Vernetzungstemperatur der im Material enthaltenen Bindemittel aufgeheizt werden.

Dabei ist insbesondere das Entweichen im granularen Reibmaterial enthaltener oder während des Pressvorgangs, insbesondere aufgrund der Vernetzungsreaktion entstehender Gase, problematisch. Die äußeren Schichten härten aus, Reaktionsgas wird in der Mitte des Belages eingeschlossen und führt bei zu kurzen Presszeiten zu Rissen und Blasenbildung in der Belagmitte und erhöhter Kompressibilität. Durch die Gasentstehung und Gasentweichung aus dem Pressgut entstehen auch mechanische Spannungen, die mitunter zur Bildung von Rissen im Reibmaterial führen, die dessen Güte und Qualität mindern.

Im Stand der Technik sind verschiedenartige Verfahren und Vorrichtungen zur Einbringung einer Wärmemenge in das zu verpressende Reibmaterial bekannt.

Üblicherweise erfolgt der Wärmeeintrag in das zu verpressende Reibmaterial über einen beheizbaren Pressstempel und/oder über eine beheizbare Pressform. Dies bedingt jedoch, dass ein konvektionsbasierter Wärmeeintrag in das zu verpressende Reibmaterial, insbesondere von den äußeren Grenzflächen nach innen, erfolgt. Folglich werden diejenigen Bereiche, die verhältnismäßig weit von den Grenzflächen der Pressform und/oder des Pressstempels liegen, zeitlich verzögert zu den Randbereichen des Reibmaterials auf die geforderte Temperatur aufgeheizt.

Dies bedingt die zuvor angesprochenen verhältnismäßig langen Presszeiten und geht oftmals mit einer räumlich inhomogenen Erwärmung des Reibmaterials einher, was sich aufgrund der Gefahr von Rissbildungen nachteilig auf die Qualität des zu erzeugenden Produkts auswirkt.

Das Ziel des Pressvorganges ist darin zu sehen, das Reibmaterial so zu festigen, dass es, ohne Blasen und Risse, für die nachgelagerte Wärmebehandlung im Ofen zur Verfügung gestellt werden kann. Dort erfolgt dann die endgültige Durchhärtung des Reibmaterials.

Eine Vorrichtung gemäß dem Oberbegriff des Anspruchs 1 ist aus der DE 689 12 899 T2 oder der EP 0 386 652 bekannt. Dieser Stand der Technik zeigt Formungsvorrichtungen, bei denen an dem Pressstempel oder der Pressform Vorsprünge vorgesehen sind, die sich dann in den Reibbelag auf der Seite der Reibfläche eindrücken und Rillen oder Nuten in der Fläche des Bremsbelags erzeugen. Diese Rillen oder Nuten dienen dazu, beim Einsatz des Belags Flüssigkeit oder Abrieb von der Oberfläche zu entfernen. Nach der EP 0 386 652 wird eine Art Vorvernetzung an den Konturflächen der Vertiefungen durchgeführt, um das Zusammenwachsen der Vertiefungen im nachfolgenden Wärmebehandlungsprozess zu verhindern.

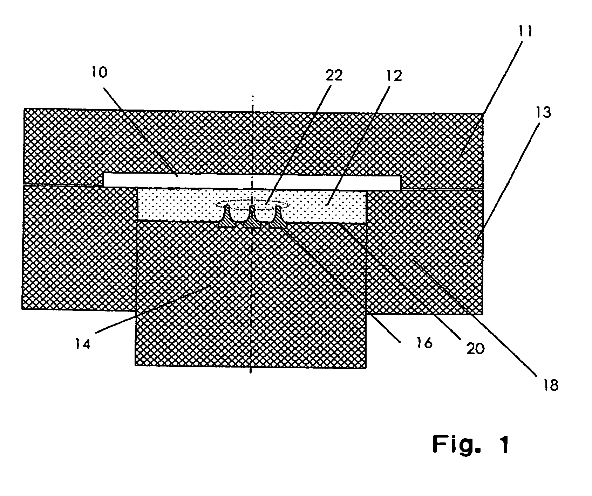

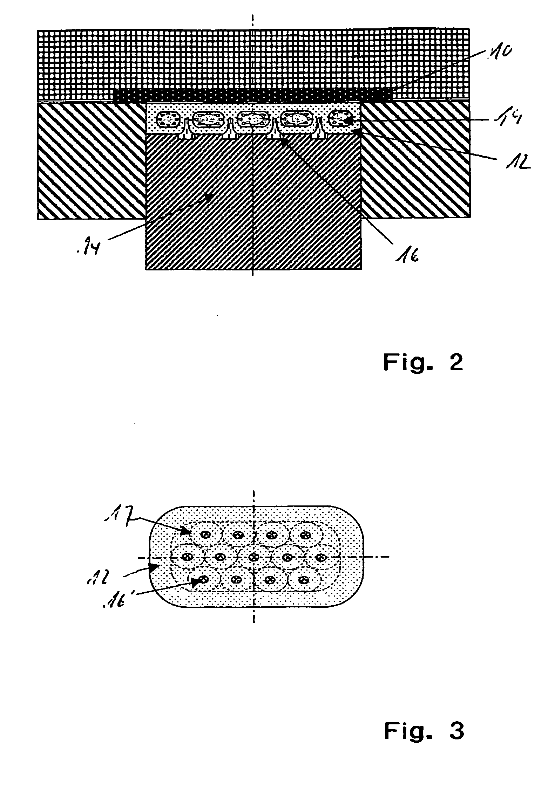

Die US-A-2006 091 583 beschreibt das Pressformen von Faserverbundwerkstoffen unter Verwendung von Pressformen, wie sie in den Figuren 1 und 2 dargestellt sind. Diese Pressformen besitzen einen Formhohlraum. Der Formhohlraum ist an der Unterseite durch eine Wärmequelle und an der Oberseite durch eine Wärmequelle begrenzt. Auf die untere Wärmequelle sind Stahlformeinsätze aufgesetzt, wobei zwischen der Wärmequelle und den Stahlformeinsätzen Isolierteile zwischengefügt sind. Mit der Pressform, wie sie in den Figuren 1 und 2 dargestellt ist, werden beispielsweise Bremsscheiben geformt, die in den Figuren 3 und 4 gezeigt sind. Die Stahlformeinsätze der Pressform begrenzen dementsprechend den inneren und äußeren Rand der kreisringförmigen Bremsscheibe. Die Besonderheit dieser Pressform ist in den Isolierteilen zu sehen. Sie sollen die Wärmeübertragung von der Wärmequelle auf die Stahlformeinsätze verzögern. Wie auf Seite 3, Abschnitt [0024], erläutert ist, soll mit den Isolierteilen verhindert werden, dass die Kanten der Formrohlinge einer beschleunigten Erwärmung und einer beschleunigten Härtung unterworfen werden. Dadurch wird eine Belüftungsdauer der inneren Bereiche der Formrohlinge verlängert und Fehlstellen sollen dadurch vermieden bzw. verringert werden. Bei dieser Vorrichtung handelt es sich nicht um eine gattungsgemäße Vorrichtung, da die gezeigte Pressform kein Element aufweist, das über die Fläche des Pressstempels oder der Pressform, die beim Pressformen des Reibbelags die Reibfläche begrenzt, vorsteht. Vielmehr sind die vorstehenden Elemente nach dieser Druckschrift so angeordnet, dass sie die innere Kante und die äußere Kante der zu pressenden Bremsscheibe begrenzen, aber nicht die Reibfläche. Da die Einsätze nach diesem Dokument mit Isolierteilen unterlegt sind, ist davon auszugehen, dass die vorstehenden Elemente aus einem Material bestehen, das eine Wärmeleitfähigkeit besitzt, die höher als oder annähernd gleich wie diejenige des Materials des Pressstempels und/oder der Pressform ist, in die sie eingesetzt sind.

Die JP-A-54 060 360 zeigt eine Pressform für Bremsbelagsklötze. Die Pressform besitzt einen Pressstempel, der eine Vielzahl von konischen Stiften besitzt, die sich beim Pressen des Bauteils in die eine Seite des Bremsklotzes eindrücken. Die dadurch entstehenden Löcher im Bremsklotz sollen Gase aufnehmen bzw. abführen, da diese Gase ansonsten den Reibungskoeffizienten beeinflussen können. Es ist davon auszugehen, dass diese Löcher in der Reibfläche gebildet sind. Da die Stifte einstückig mit dem Pressstempel ausgebildet sind, bestehen sie aus demselben Material wie der Pressstempel und weisen somit eine Wärmeleitfähigkeit auf, die derjenigen des Materials des Pressstempels entspricht.

Die JP-A-2003 127 161 zeigt eine herkömmliche Vorrichtung zum Pressformen von Reibmaterialien, die als Besonderheit aufweist, dass ein Teil der Form, der dem zentralen Teil des herzustellenden Gegenstands entspricht, mittels einer Heizeinrichtung beheizt werden kann.

### Aufgabe

Der vorliegenden Erfindung liegt demgegenüber die Aufgabe zugrunde, eine Vorrichtung zur Verfügung zu stellen, die einen verbesserten Wärmeeintrag in das zu verpressende Pressgut ermöglicht. Hierdurch sollen kürzere Presszeiten sowie Reibbeläge mit hoher Güte und Qualität erzielt werden. Ziel der vorliegenden Erfindung ist es ferner, die Produktionskosten und den Taktzyklus des Verpressens zu senken.

### Erfindung und vorteilhafte Wirkungen

Die der Erfindung zugrundeliegende Aufgabe wird mittels einer Vorrichtung gemäß Patentanspruch 1 gelöst. Weitere vorteilhafte Ausführungen der Erfindung sind in den Unteransprüchen angegeben.

Die erfindungsgemäße Vorrichtung ist zum Pressen oder Härten eines oder mehrerer Reibbeläge, insbesondere für Kupplungen oder Bremsen von Fahrzeugen, insbesondere Kraftfahrzeugen, ausgelegt. Sie weist eine Pressform bzw. Matrize und einen Pressstempel bzw. eine Patrize auf. Pressform und Pressstempel sind zueinander beweglich gelagert. Es ist dabei vorgesehen, dass der Pressstempel bei Einleitung des Pressvorgangs in die Pressform einfährt und dabei das in der Pressform enthaltene bzw. darin aufgenommene Pressgut unter Wärmeeinwirkung verdichtet bzw. verpresst.

Durch das mindestens eine vorstehende Element wird die Oberfläche des herzustellenden Reibbelags perforiert, was insbesondere dann der Fall ist, wenn mehrere solcher Elemente eingesetzt werden. Hierdurch wird die mechanische Festigkeit des Reibbelags durch eine teilweise Aushärtung im Laufe des Herstellungsverfahrens des Belags verbessert. Durch diese Perforierung wird nämlich ein Vernetzungsgitter oder teilvernetztes Gitter innerhalb des Produktes erzeugt.

Ein wesentliches Merkmal der erfindungsgemäßen Vorrichtung ist insbesondere darin zu sehen, dass das mindestens eine Element als separates Bauteil in den Pressstempel eingesetzt und als Wärmeübertragungselement ausgebildet ist, indem es aus einem Material besteht, das eine Wärmeleitfähigkeit besitzt, die höher oder annähernd gleich als diejenige des Materials des Pressstempels und/oder der Pressform ist, in die es eingesetzt ist.

Zumindest ein Wärmeübertragungselement ist entweder am Pressstempel oder an der Pressform vorgesehen, welches zumindest beim Pressvorgang wenigstens bereichsweise in dem zu verpressenden Pressgut zu liegen kommt. Das zumindest eine Wärmeübertragungselement befindet sich entweder bereits vor Einleitung des Pressvorgang im Pressgut oder es wird während des Pressvorgangs in das zu verpressende Pressgut eingeführt. Auf jeden Fall bewirkt es einen verbesserten Wärmeeintrag. Vorzugsweise steht das Wärmeübertragungselement mit einem Wärmereservoir oder mit einer Heizung in thermischem Kontakt. Das Wärmeübertragungselement weist dabei insbesondere eine dem Pressstempel oder der Pressform entsprechende bzw. vergleichbare Heiztemperatur auf.

Eine Besonderheit der erfindungsgemäßen Vorrichtung ist darin zu sehen, dass das zumindest eine Wärmeübertragungselement einen unmittelbaren Wärmeeintrag in zentrale Bereiche des Pressguts bewirkt, die von den äußeren Grenzflächen des zu fertigenden Reibbelags beabstandet sind.

Mittels des zumindest einen Wärmeübertragungselements kann ein unmittelbarer Wärmeeintrag in solche Bereiche des Pressguts erzielt werden, die nicht unmittelbar an Grenzflächen des Pressstempels oder der Pressform angrenzen. Auf diese Art und Weise ermöglicht die Erfindung im Vergleich zum Stand der Technik eine räumlich homogenere Einbringung thermischer Energie in das zu verpressende Material, wodurch ein räumlich gleichmäßigeres Vernetzen der im Material enthaltenen Bindemittel und eine damit einhergehende gleichmäßige Gasentwicklung erzielt werden kann. Etwaige schädigende Rissbildungen können somit deutlich reduziert werden und die Presszeit kann erheblich, insbesondere auf ein Intervall geringer als fünf Minuten, vorzugsweise gar geringer als drei Minuten, reduziert werden.

Nach einer ersten vorteilhaften Ausgestaltung der Erfindung dringt das zumindest eine Wärmeübertragungselement unmittelbar mit oder kurz nach Einleitung des Pressvorgangs in das zu verpressende Pressgut zumindest bereichsweise ein. Der Wärmeeintrag erfolgt somit nicht nur über die überwiegend eben ausgebildeten Grenzflächen des zu verpressenden Reibmaterials, sondern auch mittels des zumindest einen in das Reibmaterial unmittelbar eindringenden oder darin zu liegen kommenden Wärmeübertragungselements.

Dabei ist insbesondere vorgesehen, dass das Wärmeübertragungselement über die Reibfläche in das Pressgut eindringt bzw. die Reibfläche des Reibmaterials während des Pressvorgangs durchsetzt. Zwar entstehen hierdurch Vertiefungen in der Reibfläche, welche, im Falle eines Scheibenbremsbelags, im Einbauzustand an einer rotierenden Bremsscheibe zur Anlage gelangt. Die Geometrie des Wärmeübertragungselements und seiner Anordnung, beispielsweise am Pressstempel, ist jedoch derart gewählt, dass die vom Wärmeübertragungselement hervorgerufenen Vertiefungen im späteren Reibbelag aufgrund ihrer geringen Größe und ihrer vorzugsweisen Anordnung im mittleren Flächensegment der Reibfläche keinen nennenswerten Einfluss auf die Reibwirkung haben. Jedenfalls überwiegen die erfindungsgemäß erzielbaren Vorteile hinsichtlich Presszeit und Güte des herzustellenden Produkts gegenüber etwaigen reibungsmindernden Effekten. Vorzugsweise sollte das mindestens eine Wärmeübertragungselement bei dem Pressvorgang etwa bis zur Hälfte des verpressenden Pressguts eindringen.

Das mindestens eine Wärmeübertragungselement durchsetzt während des Pressvorgangs die spätere Reibfläche des Reibbelags.

Nach einer weiteren Ausführungsform der Erfindung ist vorgesehen, dass am Pressstempel mehrere voneinander beabstandete Wärmeübertragungselemente angeordnet sind. Diese sind an der Seite des Pressstempels vorgesehen, die dem zu verpressenden Pressgut zugewandt ist, so dass bereits vor, spätestens aber mit Zustellung des Pressstempels von Pressgut umschlossen sind bzw. in das zu verpressende Pressgut eintauchen.

Nach einer weiteren vorteilhaften Ausgestaltung der Erfindung ist vorgesehen, dass das zumindest eine Wärmeübertragungselement von der im Wesentlichen ebenen Oberfläche des Pressstempels hervorsteht. Demzufolge ist es als Stift oder Dorn ausgebildet, der bis zu einer vorgegebenen Eindringtiefe beim Verpressen in das Reibmaterial eindringt oder bereits vor Einleitung des eigentlichen Pressvorgangs im Reibmaterial eingebettet ist. Durch diese stift-, pin- oder dornartige Ausgestaltung wird in vorteilhafter Weise erreicht, dass auch solche Bereiche des Pressguts unmittelbar nach Einleitung des Pressvorgangs, vergleichbar den peripheren Bereichen des Reibbelags, erwärmt werden.

Weiterhin ist vorgesehen, dass das zumindest eine Wärmeübertragungselement eine vom Pressstempel wegweisend verjüngende Außenkontur oder Außengeometrie aufweist. Es kann beispielsweise rund und zylindrisch oder eckig, sprich quaderförmig oder tetraedrisch, ausgebildet sein.

Nach einer bevorzugten Ausführungsform ist das Wärmeübertragungselement kegelstumpfartig, tetraedrisch, konisch oder trichterartig ausgebildet. Zur Reibbelagmitte hin läuft es verjüngend bzw. spitz zu. Bei einer trichterartigen Ausgestaltung ist vorgesehen, dass das weite Ende des Trichters dem Pressstempel zugewandt ist.

Die vom Pressstempel wegweisend verjüngende Außenkontur des zumindest einen Wärmeübertragungselements hat den Vorteil, dass mit dem Reibmaterial keine formschlüssige Verbindung gebildet wird. So weist das Wärmeübertragungselement keine Hinterschneidungen oder dergleichen Abschnitte auf, die, nach Durchführen des Pressvorgangs, ein Entfernen der Wärmeübertragungselemente aus dem Pressmaterial verhindern oder zumindest erschweren würden.

Weiterhin ist vorgesehen, dass das Wärmeübertragungselement einen Sockel aufweist, mit dem es am Pressstempel angeordnet ist. Der Sockel weist vorzugsweise ein Gewinde auf, mit dem das zumindest eine Wärmeübertragungselement in dafür vorgesehene Bohrungen mit entsprechenden Gegengewinden am Pressstempel befestigt werden kann. Außerhalb des Sockelbereichs ist das Wärmeübertragungselement vorzugsweise mit einer glatten Oberfläche versehen, die ein besonders reibungsarmes Eindringen und Herausziehen des Wärmeübertragungselements in das bzw. aus dem zu verpressenden Material unterstützt.

Des Weiteren ist nach der Erfindung vorgesehen, dass das zumindest eine Wärmeübertragungselement vor oder nach einer Montage am Pressstempel mit einer reibungsvermindernden Oberfläche überzogen bzw. beschichtet wird. Hierbei ist insbesondere vorgesehen, das Wärmeübertragungselement zu verchromen.

Weiterhin kann vorgesehen werden, das Wärmeübertragungselement bzw. den Sockel des Wärmeübertragungselements mit einer Schraubenkontur, beispielsweise einem Außensechskant, zu versehen, so dass mittels eines Schraubenschlüssels ein Einschrauben des Wärmeübertragungselements in vorgesehene Aufnahmen am Pressstempel erfolgen kann.

Als ergänzende oder alternative Befestigungsmittel ist ein Kleben oder Verschweißen des Wärmeübertragungselements am Pressstempel vorgesehen.

Nach einer Weiterbildung der Erfindung wird das zumindest eine Wärmeübertragungselement oder die mehreren Wärmeübertragungselemente aus gehärtetem Stahl oder einem vergleichbar formstabilen Metall oder einer entsprechend harten Keramik gefertigt.

Weiterhin ist vorgesehen, dass die minimale Länge eines Wärmeübertragungselements, über die es in die Reibmasse eindringt, 3 mm beträgt.

Das mindestens eine Wärmeübertragungselement sollte von der Ebene des Pressstempels vorstehen. Die maximale Erstreckung von der Ebene des Pressstempels aus richtet sich nach der Dicke des zu verpressenden Reibbelags. Es ist dabei vorgesehen, dass die Länge des Wärmeübertragungselements etwas geringer, zumindest um 0,5 mm geringer, als die Dicke des Reibbelags nach vollzogenem Pressvorgang ist. Auf keinen Fall sollen die Wärmeübertragungselemente das Reibmaterial vollständig, im Falle eines Scheibenbremsbelags bis hin zur Trägerplatte, durchragen bzw. durchdringen.

Nach einer Weiterbildung der Erfindung sind zumindest drei stiftartig ausgebildete Wärmeübertragungselemente in regelmäßiger Anordnung am Pressstempel angeordnet. Hier ist insbesondere, bezogen auf die Umlaufrichtung der Bremsscheibe im späteren Montagezustand, vorgesehen, die einzelnen Wärmeübertragungselemente im mittleren Drittel des Pressstempels anzuordnen. Von Vorteil ist beispielsweise eine dreieckige Anordnung der zumindest drei Wärmeübertragungselemente, wobei eines der Wärmeübertragungselemente in der Mitte zwischen den Seitenrändern der Pressform zu liegen kommt und die beiden übrigen Wärmeübertragungselemente symmetrisch zu dieser Mittellinie zu liegen kommen.

Es sind auch andere Anordnungen mehrerer Wärmeübertragungselemente, so etwa viereckige, quadratische, hexagonale, matrix- oder gitterähnliche sowie kreis-ellipsen-oder spiralartige Anordnungen, im Rahmen der Erfindung vorgesehen.

Insgesamt kann durch den Einsatz der erfindungsgemäßen Wärmeübertragungselemente ein verbesserter und zügigerer Wärmeeintrag in die Reibbelagmasse erzielt werden. Während des Pressvorgangs entstehen in unmittelbarer Umgebung der einzelnen Wärmeübertragungselemente Bereiche im Reibmaterial, die besonders schnell auf eine Temperatur oberhalb der Reaktionstemperatur der im Material enthaltenen Bindemittel aufgeheizt werden. Auf diese Art und Weise werden vorzugsweise im mittleren Bereich des zu verpressenden Reibbelags lokale Bereiche erzeugt, die relativ rasch aushärten, und die, bezogen auf den späteren Einbauzustand in der Bremse, in Axialrichtung eine Art von Festigkeitsstegen erzeugen, die in vorteilhafter Weise einer Tendenz zur Rissbildung entgegenwirken.

Die mit der erfindungsgemäßen Vorrichtung herstellbaren Reibbeläge weisen aufgrund der die Reibfläche beim Pressen durchdringenden Wärmeübertragungselemente in der Reibfläche einzelne lokale Vertiefungen auf, die einerseits die Reibwirkung des Belags kaum merklich beeinflussen und die andererseits aber für den Entgasungsprozess beim Pressen des Reibbelags von Vorteil sind. Diese in den Reibbelag hineinragenden Vertiefungen ermöglichen eine bessere Abfuhr von im Pressgut enthaltenen oder während des Pressvorgangs entstehenden Gasen und Dämpfen.

Die einzelnen Vertiefungen bilden eine Art Entgasungskanäle, die jeweils ein Entweichen von Gas aus denjenigen Bereichen des Reibbelags unterstützen, die verhältnismäßig weit von der Reibfläche entfernt sind. Innenliegende Gasblasen üben infolge des von außen nachlassenden Gegendrucks bei Beendigung des Pressvorgangs einen nach außen gerichteten Druck auf die Randbereiche des Reibbelags aus, was zu schadhaften Rissbildungen und zu schweren Schädigungen des Reibbelags führen kann.

Die von den Wärmeübertragungselementen gebildeten Vertiefungen verbessern die Gasabfuhr aus den innenliegenden Bereichen des Reibbelags, so dass einer Entstehung solcher inneren Gasblasen entgegengewirkt werden kann.

Weitere Ziele, Merkmale sowie vorteilhafte Anwendungsmöglichkeiten der Erfindung ergeben sich aus der nachfolgenden Beschreibung eines Ausführungsbeispiels anhand der Zeichnung. Dabei bilden sämtliche beschriebenen sowie bildlich wiedergegebenen Merkmale in ihrer sinnvollen Kombination den Gegenstand der Erfindung, auch unabhängig von den Patentansprüchen und deren Rückbezügen.

### In der Zeichnung zeigt

- Figur 1: eine schematische Darstellung der Pressvorrichtung im Querschnitt mit drei Wärmeübertragungselementen,
- Figur 2: eine Darstellung, die der Figur 1 entspricht, allerdings mit einer größeren Anzahl an Wärmeübertragungselementen, und
- Figur 3: eine Draufsicht auf das gepresste Reibmaterial mit den in das Reibmaterial eingedrungenen, stiftförmigen Wärmeübertragungselementen.

Die in Figur 1 schematisch wiedergegebene Darstellung einer Presseinrichtung weist eine Pressform 18 mit einem oberen Teil 11 und einem unteren Teil 13 auf. Diese beiden Teile 11 und 13 der Pressform 18 sind beweglich zueinander ausgebildet, damit eine Belagträgerplatte 10 durch Herstellung eines Scheibenbremsbelags in die Pressform 18 eingelegt werden kann.

Vor dem Einlegen der Trägerplatte 10 wird das in granularer Form vorliegende Reibmaterial 12 in die Pressform 18 eingefüllt. Danach wird der gegenüber der Pressform beweglich gelagerte Pressstempel 14 zur Belagträgerplatte 10 hin bewegt. Der Pressstempel 14 bewirkt ein Verdichten und Pressen des Reibmaterials 12 über ein vorgegebenes Zeitintervall, bis entweder ein fertig gepresster Reibbelag oder ein Zwischenprodukt, typischerweise ein Grünling, aus der Pressform entnommen und weiteren Bearbeitungsschritten, wie etwa einem Aushärten oder Scorchen, zugeführt werden kann.

An dem Pressstempel 14 sind insgesamt zumindest drei Wärmeübertragungselemente 16 angeordnet. Diese weisen einen in Figur 1 unten liegenden Sockelbereich auf, mit dem die Wärmeübertragungselemente 16 innerhalb der Struktur des Pressstempels 14 zu liegen kommen. Außerhalb des Pressstempels 14 verjüngen sich die einzelnen Wärmeübertragungselemente 16 nach oben in die Reibbelagmasse hinein. Die Eindringtiefe der Wärmeübertragungselemente 16 in die Reibbelagmasse 12 kann individuell an die Beschaffenheit und an die Anforderungen des Pressvorgangs angepasst sein.

Es ist beispielsweise vorgesehen, die Wärmeübertragungselemente 16 in ihrem Sockelbereich mit einem Gewinde zu versehen, so dass verschlissene Wärmeübertragungselemente gegebenenfalls ausgetauscht werden können. Zudem ist denkbar, die Geometrie und die Materialauswahl der Wärmeübertragungselemente 16 an vorgegebene Prozessparameter und an die Zusammensetzung der jeweiligen Reibbelagmischung 12 anzupassen.

Die stiftartig und konisch verjüngend zulaufend ausgebildeten Wärmeübertragungselemente 16 sind vorzugsweise mit einer glatten, etwa verchromten, Oberfläche versehen, damit sie bei einer Abwärtsbewegung des Pressstempels 14 nach Beendigung des Pressvorgangs besonders leichtgängig aus der verpressten Masse 12 herausgeführt werden können. Die vorliegende Konfiguration mit einem untenliegenden Pressstempel hat den Vorteil, dass unmittelbar beim Verfüllen der Pressform mit dem granularen Reibmaterial die einzelnen Wärmeübertragungselemente 16 bereits inmitten der zu verpressenden Masse 12 zu liegen kommen.

Mit der Bezugsziffer 20 ist die spätere Reibfläche des fertigen Scheibenbremsbelags bezeichnet.

Es sind jedoch auch andere Konfigurationen von Pressvorrichtungen denkbar, bei denen beispielsweise die Wärmeübertragungselemente 16 an einem Pressstempel anzuordnen sind, der erst beim Einleiten des Pressvorgangs mit der zu verpressenden Masse in Berührung gelangt, so dass die einzelnen Wärmeübertragungselemente erst dann in die zu verdichtende Masse eintauchen.

Mittels der Wärmeübertragungselemente 16 kann ein besonders homogenes Einbringen von Wärmeenergie in die zu verdichtende Reibmasse 12 erfolgen. Insbesondere kann ein mit Bezugsziffer 22 angedeuteter Bereich im Zentrum des späteren Reibbelags bereits zu Beginn des Pressvorgangs auf die gewünschte Temperatur aufgeheizt werden. Hierdurch können insbesondere im mittleren Bereich 22 des Reibbelags aufgrund der früher eintretenden Bindemittel-Vernetzungsreaktion lokale Bereiche hoher Festigkeit und Struktursteifigkeit erzielt werden. Dies wirkt einer unerwünschten Rissbildung in besonders vorteilhafter Art und Weise entgegen.

In den Figuren 2 und 3 ist schematisch eine weitere Ausführungsform einer Vorrichtung gezeigt, die in ihrem Grundaufbau derjenigen entspricht, wie sie in Figur 1 dargestellt und vorstehend beschrieben ist. Folglich werden für solche Bauteile, die vergleichbar oder identisch zu denjenigen der Vorrichtung der Figur 1 sind, mit denselben Bezugszeichen bezeichnet, und die Ausführungen zu entsprechenden Bauteilen einer Figur gelten in analoger Weise auch zu der anderen Figur, auch wenn sie in Bezug auf diese andere Figur nicht wiederholt werden.

Bei der Vorrichtung nach der Erfindung werden, wie bereits vorstehend beschrieben wurde, auf dem Pressstempel 14 des Presswerkzeugs Stifte 16', die die Wärmeübertragungselemente bilden, angebracht (siehe Figur 2), die dann wiederum, entsprechend der Ausführungsform der Figur 1, in das zu verpressende Reibmaterial 12 hineinragen, und zwar in einer Länge von zum Beispiel 3 bis 15 mm. Diese Länge hängt von der jeweiligen Anwendung und insbesondere von der erforderlichen Reibmaterialdicke ab. Es muss allerdings sichergestellt werden, dass die Stifte 16' beim Pressvorgang die Belagträgerplatte 10 nicht berühren.

Ziel dieser Stifte 16' bzw. Wärmeübertragungselemente 16 ist es, den Wärmefluss in die Reibmasse 12 zu verbessern, eine bessere Entgasung zu ermöglichen und eine verfestigte Struktur zu schaffen, die sich den inneren Gasdruckkräften entgegen stellt. Die quasi äquidistante Verdichtung (Materialverdrängung) und Verfestigung (Harzreaktion) der Reibmasse 12 um den Stift 16' herum bildet Stege, die sich den Gasdruckkräften im Material entgegenstellen und die somit eine Rissbildung im Inneren des Materials nach Abschluss des Pressprozesses verhindern. Die Anordnung und Anzahl der Stifte 16' auf der Stempeloberfläche sollte so ausgeführt werden, dass ein gleichmäßigerer Wärmeeintrag in die Reibmasse 12 erfolgt und damit die Reaktionstemperatur des Harzes in allen Bereichen der Reibmasse 12 früh erreicht wird. Die Stifte 16' befinden sich in der Kernzone, da der Außenrand durch die Form beheizt wird. Durch die Vergrößerung der Wärme einleitenden, beheizten Oberfläche im Verhältnis zum erwärmenden Volumen ergibt sich eine verkürzte Erwärmungszeit. Somit kann die Presszeit reduziert werden. Durch FE-Berechnungen werden die Stiftform, die Anordnung und die Anzahl der Stifte bestimmt.

In der Ausführungsform der Figuren 2 und 3 ist eine Vielzahl von Stiften, als Beispiel insgesamt 13 solcher Stifte, über die Fläche des Pressstempels 14 verteilt, und zwar derart, dass die Randzone frei belassen wird, da diese durch das obere Pressformteil 11 beheizt wird. Diese Vielzahl von Stiften ist gleichmäßig über die Fläche verteilt, so dass aufgrund der sich um jeden Stift herum ergebenden Isothermen 17, eine im Wesentlichen gleichmäßige Wärmeverteilung ergibt, was in Figur 3 durch die aneinander angrenzenden Isothermen angedeutet wird. Nur zur Verdeutlichung ist der sich aufbauende Gasdruck in Figur 2 mit entsprechenden Drucksymbolen 19 zwischen den Bereichen der Reibmasse 12, die sich zwischen den Stiften 16' befinden, angedeutet.

Die Stifte 16' bestehen aus einem verschleißfesten Material mit hoher Wärmeleitfähigkeit. Die Form der Stifte kann z.B. konisch ausgeführt sein, damit sie sich nach dem Pressvorgang leicht aus der Belagmasse lösen können. Die Stifte 16' können rund oder eckig ausgeführt sein. Die Befestigung der Stifte 16' im Pressstempel 14 kann z. B. über eine nicht näher dargestellte Verschraubung erfolgen.

Die durch die Stifte 16' entstehenden Vertiefungen im Belagmaterial werden nach dem Pressvorgang nicht ausgefüllt und bleiben sichtbar.

### Bezugszeichenliste

- 10: Belagträgerplatte
- 11: Oberer Pressformteil
- 12: Reibmasse
- 13: Unterer Pressformteil
- 14: Pressstempel
- 16: Wärmeübertragungselement
- 18: Pressform
- 20: Reibfläche
- 22: Mittiger Bereich
- 16': Stifte
- 17: Isotherme
- 19: Drucksymbole

## Patentansprüche

1. Vorrichtung zum Pressen eines Reibbelags, insbesondere für Kupplungen oder Bremsen von Fahrzeugen, mit einer Pressform (18) und einem Pressstempel (14), die zum Verdichten oder Verpressen eines Pressguts (12) unter Wärmeeinwirkung ausgelegt sind, wobei der Pressstempel (14) oder die Pressform (18) mindestens ein vorstehendes Element (16, 16') aufweist, das über die Fläche des Pressstempels (14) oder der Pressform (18), die beim Pressformen des Reibbelags die Reibfläche begrenzt, vorsteht, **dadurch gekennzeichnet, dass** das mindestens eine Element (16, 16') als separates Bauteil in den Pressstempel (14) eingesetzt und als Wärmeübertragungselement (16, 16') ausgebildet ist, indem es aus einem Material besteht, das eine Wärmeleitfähigkeit besitzt, die höher als diejenige des Materials des Pressstempels (14) und/oder der Pressform (18) ist, in die es eingesetzt ist.

2. Vorrichtung nach Anspruch 1, **dadurch gekennzeichnet, dass** das mindestens eine Wärmeübertragungselement (16, 16') so positioniert und/oder in seinen Querschnittsabmessungen so geformt ist, dass bei einem Wärmeeintrag über das mindestens eine Wärmeübertragungselement (16, 16') eine gleichmäßige Ausbreitung und damit Verteilung der Wärme erfolgt.

3. Vorrichtung nach Anspruch 2, **dadurch gekennzeichnet, dass** das mindestens eine Wärmeübertragungselement (16, 16') so geformt ist, dass es zumindest in seinen Querschnittsabmessungen proportional den Querschnittsdimensionen der Außenkontur der zu bildenden Reibfläche angenähert ist.

4. Vorrichtung nach einem der Ansprüche 1 bis 3, **dadurch gekennzeichnet, dass** mehrere Wärmeübertragungselemente (16, 16') vorgesehen sind, die derart verteilt an dem Pressstempel (14) oder der Pressform (18) angeordnet sind, dass sich bei einem Wärmeeintrag über die Wärmeübertragungselemente (16, 16') die jeweiligen den Wärmeübertragungselementen (16, 16') zugeordneten Isothermen (17) gleicher Temperatur zeitlich gesehen über einen vorgegebenen Zeitraum gleichmäßig so verteilen, dass sich alle Isothermen (17) gleicher Größe benachbarter Wärmeübertragungselemente (16, 16') gleichzeitig am Produkt treffen.

5. Vorrichtung nach einem der vorhergehenden Ansprüche, **dadurch gekennzeichnet, dass** das mindestens eine Wärmeübertragungselement als Stift (16, 16') oder Dorn ausgebildet ist.

6. Vorrichtung nach einem der vorhergehenden Ansprüche, **dadurch gekennzeichnet, dass** das mindestens eine Wärmeübertragungselement (16, 16') eine vom Pressstempel (14) wegweisend verjüngende Außenkontur oder Geometrie aufweist.

7. Vorrichtung nach einem der vorhergehenden Ansprüche, **dadurch gekennzeichnet, dass** das mindestens eine Wärmeübertragungselement (16, 16') einen Sockel aufweist, mit dem es am Pressstempel (14) zur Anlage gelangt.

8. Vorrichtung nach einem der vorhergehenden Ansprüche, **dadurch gekennzeichnet, dass** das mindestens eine Wärmeübertragungselement (16, 16') mit einer reibungsarmen Schicht beschichtet ist.

9. Vorrichtung nach Anspruch 8, **dadurch gekennzeichnet, dass** die reibungsarme Schicht durch eine Chrom-Schicht gebildet ist.

10. Vorrichtung nach einem der vorhergehenden Ansprüche, **dadurch gekennzeichnet, dass** als Befestigung für das mindestens eine Wärmeübertragungselement (16, 16') an dem Pressstempel (14) ein Verschrauben, Verkleben oder Verschweißen vorgesehen ist.

11. Vorrichtung nach einem der vorhergehenden Ansprüche, **dadurch gekennzeichnet, dass** das mindestens eine Wärmeübertragungselement (16, 16') aus gehärtetem Stahl oder aus einer Keramik gefertigt ist.

12. Vorrichtung nach einem der vorhergehenden Ansprüche, **dadurch gekennzeichnet, dass** die minimale Längserstreckung des mindestens einen Wärmeübertragungselements (16, 16') etwa 3 mm beträgt und die maximale Längserstreckung um zumindest 0,5 mm geringer als die Dicke des Reibbelags (12) nach erfolgtem Pressvorgang ist.

13. Vorrichtung nach einem der Ansprüche 1 bis 12, **dadurch gekennzeichnet, dass** die Wärmeübertragungselemente (16, 16') gleichmäßig verteilt über die Fläche des Pressstempels (14) angeordnet sind.

14. Vorrichtung nach Anspruch 13, **dadurch gekennzeichnet, dass** der Pressstempel (14) einen Randbereich aufweist, in dem keine Wärmeübertragungselemente (16, 16') angeordnet sind.

15. Vorrichtung nach einem der Ansprüche 13 oder 14, **dadurch gekennzeichnet, dass** zumindest drei regelmäßig angeordnete Wärmeübertragungselemente (16, 16'), in Umfangsrichtung einer Bremse oder Kupplungsscheibe gesehen, im mittleren Drittel des Reibbelags (12) zu liegen kommen.

## Claims

1. Apparatus for pressing a friction lining, in particular for clutches or brakes of vehicles, having a press mould (18) and a press plunger (14) which are designed for compressing or pressing a material to be pressed (12) under the action of heat, the press plunger (14) or the press mould (18) having at least one projecting element (16, 16') which projects beyond the surface of the press plunger (14) or the press mould (18) which delimits the friction face during squeeze moulding of the friction lining, **characterized in that** the at least one element (16, 16') is inserted as a separate component into the press plunger (14) and is configured as a heat transfer element (16, 16') by it being composed of a material which has a thermal conductivity which is higher than that of the material of the press plunger (14) and/or the press mould (18), into which it is inserted.

2. Apparatus according to Claim 1, **characterized in that** the at least one heat transfer element (16, 16') is positioned in such a way and/or is formed in terms of its cross-sectional dimensions in such a way that, in the event of a heat input via the at least one heat transfer element (16, 16'), a uniform propagation and therefore distribution of the heat takes place.

3. Apparatus according to Claim 2, **characterized in that** the at least one heat transfer element (16, 16') is shaped in such a way that it is approximated at least in terms of its cross-sectional dimensions proportionally to the cross-sectional dimensions of the outer contour of the friction face to be formed.

4. Apparatus according to one of Claims 1 to 3, **characterized in that** a plurality of heat transfer elements (16, 16') are provided which are arranged distributed on the press plunger (14) or the press mould (18) in such a way that, in the event of a heat input via the heat transfer elements (16, 16'), the respective isotherms (17) of identical temperature which are assigned to the heat transfer elements (16, 16') are distributed uniformly as viewed in terms of time over a predefined time period such that all the isotherms (17) of the same magnitude of adjoining heat transfer elements (16, 16') meet at the product at the same time.

5. Apparatus according to one of the preceding claims, **characterized in that** the at least one heat transfer element is configured as a pin (16, 16') or spike.

6. Apparatus according to one of the preceding claims, **characterized in that** the at least one heat transfer element (16, 16') has a geometry or outer contour which tapers so as to point away from the press plunger (14).

7. Apparatus according to one of the preceding claims, **characterized in that** the at least one heat transfer element (16, 16') has a base, with which it comes into contact with the press plunger (14).

8. Apparatus according to one of the preceding claims, **characterized in that** the at least one heat transfer element (16, 16') is coated with a low-friction layer.

9. Apparatus according to Claim 8, **characterized in that** the low-friction layer is formed by a chromium layer.

10. Apparatus according to one of the preceding claims, **characterized in that** a screw connection, adhesive bond or weld is provided as fastening means for the at least one heat transfer element (16, 16') to the press plunger (14).

11. Apparatus according to one of the preceding claims, **characterized in that** the at least one heat transfer element (16, 16') is manufactured from hardened steel or from a ceramic.

12. Apparatus according to one of the preceding claims, **characterized in that** the minimum longitudinal extent of the at least one heat transfer element (16, 16') is approximately 3 mm and the maximum longitudinal extent is smaller by at least 0.5 mm than the thickness of the friction lining (12) after a pressing operation has taken place.

13. Apparatus according to one of Claims 1 to 12, **characterized in that** the heat transfer elements (16, 16') are arranged distributed uniformly over the surface of the press plunger (14).

14. Apparatus according to Claim 13, **characterized in that** the press plunger (14) has an edge region, in which no heat transfer elements (16, 16') are arranged.

15. Apparatus according to either of Claims 13 and 14, **characterized in that** at least three regularly arranged heat transfer elements (16, 16') come to lie in the middle third of the friction lining (12), as viewed in the circumferential direction of a brake or clutch plate.

## Revendications

1. Dispositif pour presser une garniture de friction, en particulier pour des embrayages ou des freins de véhicules, comprenant un moule de pressage (18) et un poinçon de pressage (14), lesquels sont conçus de manière à comprimer ou compresser un produit à presser (12) en appliquant de la chaleur, le poinçon de pressage (14) ou le moule de pressage (18) présentant au moins un élément saillant (16, 16') qui fait saillie au-delà de la surface du poinçon de pressage (14) ou du moule de pressage (18) qui délimite la surface de friction lors du formage par pressage de la garniture de friction, **caractérisé en ce que** l'au moins un élément (16, 16') est utilisé dans le poinçon de pressage (14) en tant que composant séparé et est réalisé sous forme d'élément de transfert thermique (16, 16'), en étant constitué d'un matériau qui possède une conductibilité thermique supérieure à celle du matériau du poinçon de pressage (14) et/ou du moule de pressage (18) dans lequel il est inséré.

2. Dispositif selon la revendication 1, **caractérisé en ce que** l'au moins un élément de transfert thermique (16, 16') est positionné et/ou est formé avec des dimensions en section transversale telles que lors de l'introduction de chaleur par le biais de l'au moins un élément de transfert thermique (16, 16'), une diffusion et donc une répartition uniformes de la chaleur sont effectuées.

3. Dispositif selon la revendication 2, **caractérisé en ce que** l'au moins un élément de transfert thermique (16, 16') est formé de telle sorte qu'au moins dans ses dimensions en section transversale, il se rapproche en proportion aux dimensions en section transversale du contour extérieur de la surface de friction à former.

4. Dispositif selon l'une quelconque des revendications 1 à 3, **caractérisé en ce que** plusieurs éléments de transfert thermique (16, 16') sont prévus, lesquels sont disposés de manière répartie sur le poinçon de pressage (14) ou sur le moule de pressage (18) de telle sorte que dans le cas de l'introduction de chaleur par le biais des éléments de transfert thermique (16, 16'), les isothermes (17) de même température dans le temps respectivement associés aux éléments de transfert thermique (16, 16') soient répartis uniformément pendant un intervalle de temps prédéterminé de telle sorte que tous les isothermes (17) de même grandeur d'éléments de transfert thermique adjacents (16, 16') se rencontrent simultanément sur le produit.

5. Dispositif selon l'une quelconque des revendications précédentes, **caractérisé en ce que** l'au moins un élément de transfert thermique est réalisé sous forme de goupille (16, 16') ou de mandrin.

6. Dispositif selon l'une quelconque des revendications précédentes, **caractérisé en ce que** l'au moins un élément de transfert thermique (16, 16') présente un contour extérieur ou une géométrie se rétrécissant en s'écartant du poinçon de pressage (14).

7. Dispositif selon l'une quelconque des revendications précédentes, **caractérisé en ce que** l'au moins un élément de transfert thermique (16, 16') présente un socle avec lequel il vient en butée contre le poinçon de pressage (14).

8. Dispositif selon l'une quelconque des revendications précédentes, **caractérisé en ce que** l'au moins un élément de transfert thermique (16, 16') est recouvert d'une couche de faible friction.

9. Dispositif selon la revendication 8, **caractérisé en ce que** la couche de faible friction est formée par une couche de chrome.

10. Dispositif selon l'une quelconque des revendications précédentes, **caractérisé en ce que** l'on prévoit en tant que fixation pour l'au moins un élément de transfert thermique (16, 16') sur le poinçon de pressage (14) un vissage, un collage, ou un soudage.

11. Dispositif selon l'une quelconque des revendications précédentes, **caractérisé en ce que** l'au moins un élément de transfert thermique (16, 16') est fabriqué en acier trempé ou en céramique.

12. Dispositif selon l'une quelconque des revendications précédentes, **caractérisé en ce que** l'étirage longitudinal minimal de l'au moins un élément de transfert thermique (16, 16') mesure environ 3 mm et l'étirage longitudinal maximal est au moins inférieur de 0,5 mm à l'épaisseur de la garniture de friction (12) une fois l'opération de pressage effectuée.

13. Dispositif selon l'une quelconque des revendications 1 à 12, **caractérisé en ce que** les éléments de transfert thermique (16, 16') sont disposés de manière répartie uniformément sur la surface du poinçon de pressage (14).

14. Dispositif selon la revendication 13, **caractérisé en ce que** le poinçon de pressage (14) présente une région de bord dans laquelle ne sont disposés aucuns éléments de transfert thermique (16, 16').

15. Dispositif selon l'une quelconque des revendications 13 ou 14, **caractérisé en ce qu'**au moins trois éléments de transfert thermique disposés régulièrement (16, 16'), vus dans la direction périphérique d'un frein ou d'un disque d'embrayage, viennent se placer dans le tiers central de la garniture de friction (12).
